# FASCICULE DE BREVET EUROPEEN

(11) **EP 4 133 163 B1**
(45) Date de publication et mention de la délivrance du brevet: **19.11.2025**
(21) Numéro de dépôt: 21734381.3
(22) Date de dépôt: 25.03.2021
(51) Int. Cl.: F01D 25/24, F02C 7/04, B29C 70/48, B29C 70/46, B29C 70/32, B29C 33/22, B29C 33/30, B29L 31/08

(54) **MOULE POUR LA FABRICATION D'UN CARTER DE SOUFFLANTE DE TURBOMACHINE EN MATERIAU COMPOSITE**
FORM ZUR HERSTELLUNG EINES TURBINENMOTORGEBLÄSEGEHÄUSES AUS EINEM VERBUNDSTOFFMATERIAL
MOLD FOR MANUFACTURING A TURBINE ENGINE FAN CASING FROM A COMPOSITE MATERIAL

(30) Priorité: 10.04.2020 US 202063008237 P
(43) Date de publication de la demande: 15.02.2023
(73) Titulaire: SAFRAN AIRCRAFT ENGINES, 75015 Paris (FR)
(72) Inventeur: FABRE, Hubert, Jean, Marie, 77550 MOISSY-CRAMAYEL (FR); JAUSSAUD, Raoul, 77550 MOISSY-CRAMAYEL (FR); TERRY, Paul, Franklin, New Hampshire 03235 (US)
(74) Mandataire: Cabinet Beau de Loménie
(86) Numéro de dépôt international: PCT/FR2021/050520
(87) Numéro de publication internationale: WO 2021/205092

(56) Documents cités:
- WO-A1-2017/089680
- CN-A- 110 605 545
- US-A1- 2013 087 955
- US-A1- 2016 009 003

## Description

### Arrière-plan de l'invention

La présente invention se rapporte au domaine général de la fabrication des carters de turbomachine, et plus particulièrement des carters de rétention pour soufflante de turbine à gaz pour moteur aéronautique.

Dans une turbomachine aéronautique un carter de soufflante remplit plusieurs fonctions. Le carter de soufflante définit la veine d'entrée d'air de la turbomachine, supporte un matériau abradable en regard du sommet des aubes de la soufflante, supporte une éventuelle structure d'absorption d'ondes sonores pour le traitement acoustique en entrée de la turbomachine, et incorpore ou supporte un bouclier de rétention.

Le bouclier de rétention forme un piège retenant les débris, tels que les objets ingérés ou des fragments d'aubes endommagées, projetés sous l'effet de la force centrifuge, afin d'éviter que ces débris traversent le carter et atteignent d'autres parties de l'aéronef.

Il est connu de réaliser le carter de soufflante en matériau composite, et plus particulièrement en matériau composite à matrice organique. Pour ce faire, une texture fibreuse est enroulée autour d'un mandrin afin de former une préforme fibreuse qui possède la forme du carter à fabriquer. La préforme fibreuse est ensuite densifiée par une matrice.

Afin de réaliser la densification de la préforme fibreuse par la matrice, ladite préforme fibreuse est enroulée autour d'un mandrin d'imprégnation, puis des secteurs angulaires de contre-moule sont disposés autour du mandrin d'imprégnation afin de former le moule d'injection. Un matériau précurseur de la matrice est ensuite injecté dans le moule afin de densifier la préforme fibreuse avec ledit matériau précurseur de la matrice. Une fois la préforme fibreuse densifiée, le matériau précurseur est polymérisé.

On connait par exemple le document WO2017/089680 qui décrit un moule d'injection pour la fabrication d'un carter de soufflante en matériau composite qui comprend une pluralité de secteurs angulaires disposés autour d'un mandrin d'imprégnation.

Dans le document WO2017/089680, l'étanchéité entre les différents secteurs angulaires est assurée par des pièces en forme de T qui sont fixées par des boulonnages entre chaque secteur angulaire et qui compriment chacune un joint plat chevauchant deux secteurs angulaires adjacents.

Une telle solution possède l'inconvénient de demander un temps de manutention très important, notamment pour visser ou dévisser les boulonnages fixant les pièces en forme de T aux secteurs angulaires.

De plus, un tel moule d'injection peut rencontrer un problème de rigidité, et notamment de rigidité au niveau de la liaison entre les secteurs angulaires.

### Objet et résumé de l'invention

La présente invention a donc pour but principal de pallier un tel inconvénient en proposant, selon un premier aspect de l'invention, un moule pour la fabrication d'un carter de soufflante de turbomachine en matériau composite, et plus précisément en matériau composite à matrice organique, comprenant :
- un mandrin autour duquel une préforme fibreuse de carter de soufflante est destiné à être enroulée ;
- une pluralité de secteurs angulaires de contre-moule assemblés sur le contour externe du mandrin qui sont destinés à fermer le moule et à compacter la préforme fibreuse enroulée sur le mandrin ;

caractérisé en ce que chaque secteur angulaire comprend d'une part une première bride latérale qui est située à première extrémité des secteurs angulaires et d'autre part une deuxième bride latérale qui est située à une deuxième extrémité des secteurs angulaires et qui est opposée à la première extrémité, la première bride latérale et la deuxième bride latérale étant configurée pour coopérer respectivement avec la deuxième bride latérale et la première bride latérale des secteurs angulaires adjacent,
au moins un secteur angulaire comprenant une première gorge formée dans au moins une parmi la première bride latérale et la deuxième bride latérale, un premier joint étant disposé dans ladite première gorge, ledit premier joint étant configuré pour être comprimé entre la première bride latérale et la deuxième bride latérale de deux secteurs angulaires adjacents.

Le moule peut également comprendre les caractéristiques additionnelles suivantes, qui peuvent être prises seules ou en combinaison suivant les possibilités techniques possibles :
- chaque secteur angulaire comprend une bride avant et une bride arrière qui sont configurées pour coopérer respectivement avec une bride amont et une bride aval du mandrin, la bride amont et la bride aval comprenant respectivement une deuxième gorge et une troisième gorge, un deuxième joint et un troisième joint étant respectivement disposé dans la deuxième gorge et la troisième gorge, ledit deuxième joint étant configuré pour être comprimé entre la bride amont du mandrin et la bride avant des secteurs angulaires, ledit troisième joint étant configuré pour être comprimé entre la bride aval du mandrin et la bride arrière des secteurs angulaires, la première gorge débouchant d'une part dans la deuxième gorge et d'autre part dans la troisième gorge ;
- le moule comprend un premier groupe de secteurs angulaires pour lesquels la première gorge est formée sur la première bride latérale et sur la deuxième bride latérale, et un deuxième groupe de secteur angulaires pour lesquels la première bride latérale et la deuxième bride latérale sont lisses, un secteur angulaire du premier groupe étant disposé entre deux secteurs angulaires du deuxième groupe ;
- la première gorge est formée sur la première bride de chaque secteur angulaire ;
- la première gorge comprend une forme ondulée ;
- la première gorge est crénelée, la première gorge comprenant d'une part une pluralité de créneaux dirigés radialement vers l'intérieur et d'autre part une pluralité de créneaux dirigés radialement vers l'extérieur ;
- la première bride et la deuxième bride des secteurs angulaires comprennent des perçages, chaque secteur angulaire étant fixé à un secteur angulaire adjacent par des boulonnages disposés d'une part dans les perçages de la première bride latérale du secteur angulaire et d'autre part dans les perçages de la deuxième bride latérale du secteur angulaire adjacent ;
- les créneaux dirigés radialement vers l'extérieur sont situés entre deux perçages ;
- le premier joint est en élastomère, par exemple un élastomère vulcanisable à froid.

Selon un deuxième aspect, l'invention propose un procédé de fabrication d'un carter de soufflante de turbomachine en matériau composite avec le moule selon l'une quelconque des caractéristiques précédentes, le procédé comprenant les étapes suivantes :
- enrouler une préforme fibreuse du carter de soufflante autour du mandrin ;
- assembler la pluralité de secteurs angulaires de contre-moule sur le contour externe du mandrin en fixant la première bride latérale des secteurs angulaires avec la deuxième bride latérale d'un secteur angulaire adjacent ;
- densifier la préforme fibreuse par injection d'un matériau précurseur d'une matrice du matériau composite dans le moule ;
- polymériser le matériau précurseur pour obtenir la matrice du matériau composite ;
- retirer la pluralité de secteurs angulaires ;
- démouler le carter de soufflante.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une représentation schématique d'un moule pour la fabrication d'un carter de soufflante de turbomachine en matériau composite ;
- la figure 2 est une représentation schématique de la coopération entre des secteurs angulaires adjacents du moule de la figure 1 ;
- la figure 3a est une représentation plus précise de la zone A de la figure 2, le joint n'étant pas représenté ;
- la figure 3b est une représentation plus précise de la zone B de la figure 2, le joint n'étant pas représenté ;
- la figure 4 représente schématiquement les différentes étapes d'un procédé de fabrication d'un carter de soufflante en matériau composite.

### Description détaillée de l'invention

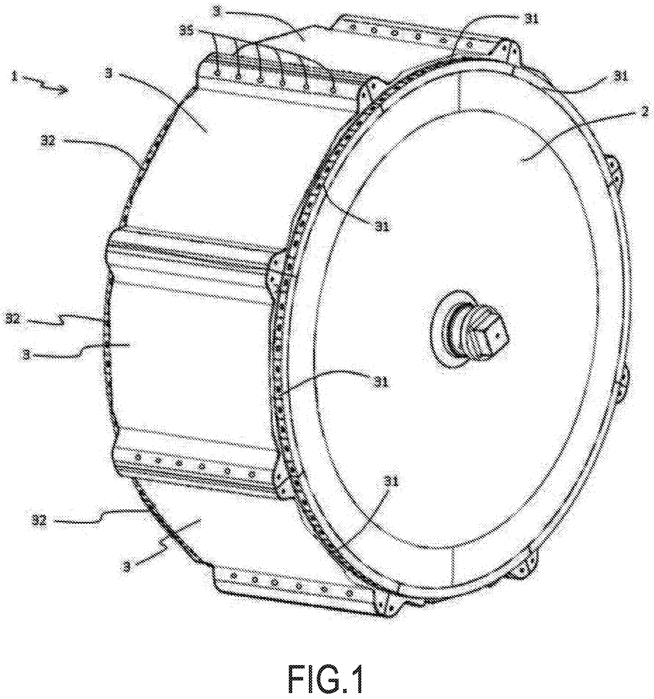

Comme illustrée sur les figures 1, 2, 3 et 4, un moule 1 pour la fabrication d'un carter de soufflante de turbomachine en matériau composite comprend un mandrin 2 autour duquel une préforme fibreuse du carter de soufflante est enroulée.

Le moule 1 est destiné à être utilisé pour l'imprégnation par un procédé du type RTM (« Resin Transfer Molding ») de la préforme fibreuse.

La préforme fibreuse peut être réalisée par tissage bidimensionnel de fibres (tissage 2D), ou bien de préférence par tissage tridimensionnel de fibres (tissage 3D).

Par « tissage tridimensionnel » ou « tissage 3D » ou encore « tissage multicouche », on entend ici un mode de tissage par lequel certains au moins des fils de trame lient des fils de chaîne sur plusieurs couches de chaîne, ou inversement, suivant un tissage correspondant à une armure de tissage, ladite armure de tissage pouvant être notamment choisie parmi une des armures suivantes : interlock, multi-toile, multi-satin et multi-sergé.

Par « tissage bidimensionnel » ou « tissage 2D » on entend ici un mode de tissage classique par lequel chaque fil de chaîne passe d'un côté à l'autre de fils d'une seule couche de trame.

La préforme fibreuse peut être réalisée par des fibres de carbone, des fibres de verre, des fibres d'aramide, ou encore des fibres de céramique.

La paroi externe du mandrin 2 autour de laquelle la préforme fibreuse est enroulée possède un profil qui correspond au profil du carter de soufflante à fabriquer.

Le moule 1 comprend également une pluralité de secteurs angulaires 3 de contre-moule qui sont assemblés de manière amovibles sur le contour externe du mandrin 2. Une fois assemblés sur le contour externe du mandrin 2, les secteurs angulaires 3 ferment le moule 1 et compriment la préforme fibreuse.

La compression de la préforme fibreuse par les secteurs angulaires 3 permet de compacter la préforme à l'épaisseur désirée et d'obtenir le taux volumique de fibres souhaité dans le carter de soufflante.

Afin de fixer les secteurs angulaires 3 au mandrin 2, le mandrin 2 comprend une bride amont 21 située à une extrémité avant du mandrin 2 et une bride aval 22 située à une extrémité arrière du mandrin 2, et chaque secteur angulaire 3 comprend d'une part une bride avant 31 qui est configurée pour coopérer avec la bride amont 21, et d'autre part une bride arrière 32 qui est configurée pour coopérer avec la bride aval 22.

Dans la variante illustrée sur les figures 1 à 4, la bride avant 31 et la bride arrière 32 des secteurs angulaires 3 sont respectivement fixées à la bride amont 21 et la bride aval 22 par des boulonnages qui sont disposés dans des perçages formés dans lesdites bride avant 31, bride arrière 32, bride amont 21 et bride aval 22.

De plus, les secteurs angulaires 3 sont fixés entre eux, chaque secteur angulaire 3 étant fixé aux deux secteurs angulaires qui lui sont adjacents.

Chaque secteur angulaire 3 comprend une première bride latérale 33 qui est située à première extrémité des secteurs angulaires 3 et une deuxième bride latérale 34 qui est située à une deuxième extrémité desdits secteurs angulaires 3, la deuxième extrémité étant opposée à la première extrémité.

Pour chaque secteur angulaire 3, la première bride latérale 33 est configurée pour coopérer avec la deuxième bride latérale 34 du secteur angulaire 3 adjacent, et ainsi la deuxième bride latérale 34 est configurée pour coopérer avec la première bride latérale 33 de l'autre secteur angulaire 3 adjacent.

Ainsi, pour fixer la pluralité de secteurs angulaires 3 sur le contour du mandrin 2, chaque secteur angulaire 3 est fixé avec les éléments suivants :
- la bride avant 31 du secteur angulaire 3 est fixée à la bride amont 21 du mandrin 2 ;
- la bride arrière 32 du secteur angulaire 3 est fixée à la bride aval 22 du mandrin ;
- la première bride latérale 33 du secteur angulaire 3 est fixée à la deuxième bride latérale 34 du premier secteur angulaire 3 adjacent ;
- la deuxième bride latérale 34 du secteur angulaire 3 est fixée à la première bride latérale 33 du deuxième secteur angulaire 3 adjacent.

Le fait que les secteurs angulaire 3 soient directement fixés entre eux, et non pas avec une pièce intermédiaire disposée entre chaque secteur angulaire, permet de renforcer la rigidité du moule 1 au niveau de liaison entre les secteurs angulaires 3, et ainsi limite la déformation du moule 1 au niveau de la liaison entre les secteurs angulaires 3.

Afin de fixer la première bride latérale 33 et la deuxième bride latérale 34, lesdites première bride latérale 33 et deuxième bride latérale 34 comprennent des perçages 35 qui permettent le passage de boulonnages.

Afin d'assurer l'étanchéité entre les différents secteurs angulaires 3, une première gorge 36 est formée dans au moins une parmi la première bride latérale 33 et la deuxième bride latérale 34.

Plus précisément, la première gorge 36 est formée dans la portion plane de la première bride latérale 33 et/ou de la deuxième bride latérale 34 qui vient s'appuyer contre la partie plane complémentaire de la deuxième bride latérale 34 ou de la première bride latérale 33 du secteur angulaire 3 adjacent.

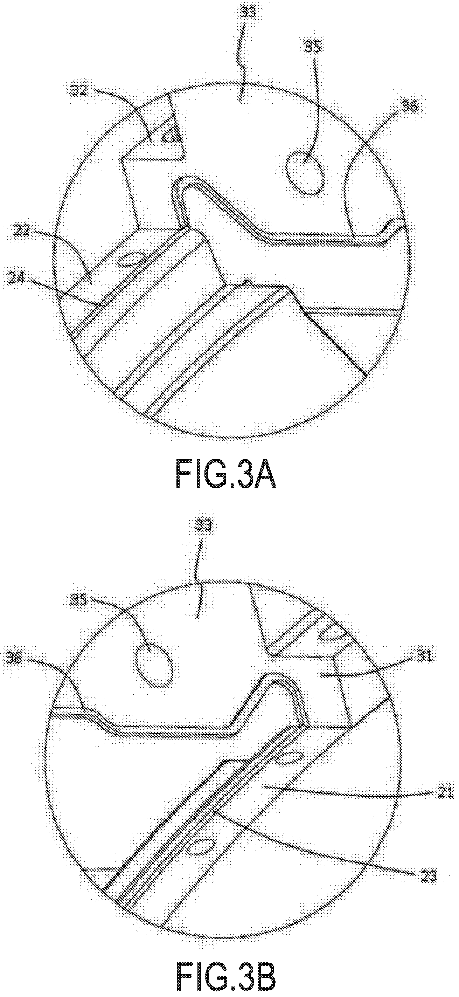

Un premier joint 5 est disposé à l'intérieur de la première gorge 36, ledit premier joint 5 étant ainsi comprimé entre d'une part la première bride latérale 33 et d'autre part la deuxième bride latérale 34, permettant ainsi d'étanchéifier la liaison entre les secteurs angulaires 3. Le premier joint 5 n'est pas représenté sur les figures 3a et 3b afin de laisser la première gorge 36 visible.

Le premier joint 5 peut être en élastomère qui est un matériau adapté aux contraintes rencontrées par le premier joint 5, et notamment en élastomère vulcanisable à froid (ou RTV pour « Room-Temperature-Vulcanizing » selon la terminologie anglo-saxonne), comme par exemple un silicone vulcanisable à froid, offrant ainsi une bonne résistance aux contraintes auxquelles est soumis le premier joint 5 ainsi qu'une utilisation simple.

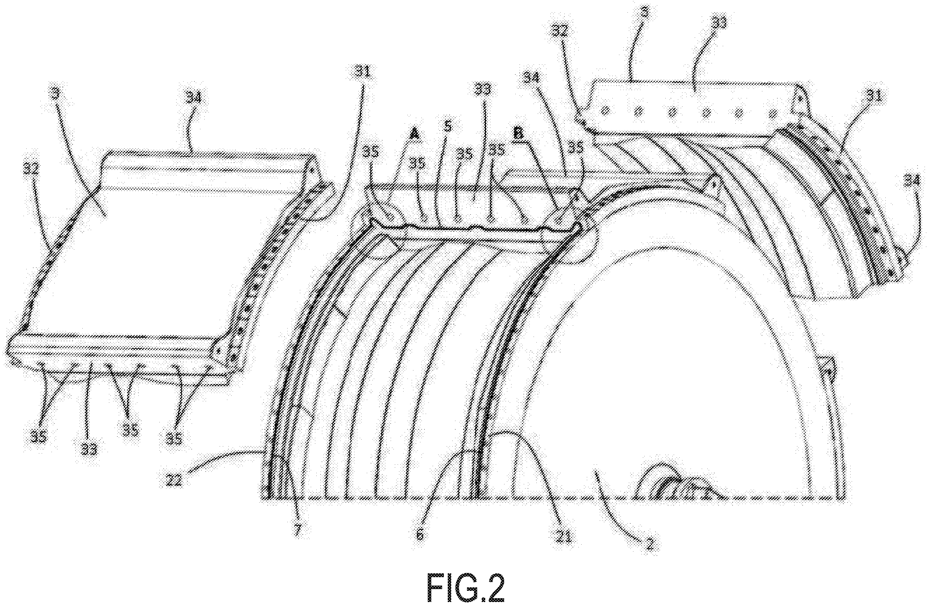

Dans la variante de réalisation illustrée sur la figure 2, la première gorge 36 n'est pas formée sur tous les secteurs angulaires 3, mais sur une partie seulement desdits secteurs angulaires 3.

Plus précisément, dans la variante illustrée sur la figure 2, le moule 1 comprend d'une part un premier groupe de secteurs angulaires 3 pour lesquels une première gorge 36 est formée à la fois sur la première bride latérale 33 et sur la deuxième bride latérale 34, et d'autre part un deuxième groupe de secteurs angulaires 3 pour lesquels la première bride latérale 33 et la deuxième bride latérale 34 sont lisses, c'est-à-dire que la première bride latérale 33 et la deuxième bride latérale 34 sont dépourvues de première gorge 36.

Un secteur angulaire 3 du premier groupe est disposé entre deux secteurs angulaires 3 du deuxième groupe. Ainsi, dans cette variante, l'étanchéité entre les différents secteurs angulaires 3 est obtenue de la manière suivante :
- le premier joint 5 disposé dans la première gorge 36 formée dans la première bride latérale 33 des secteurs angulaires 3 du premier groupe est comprimé entre d'une part la première bride latérale 33 des secteurs angulaires 3 du premier groupe et d'autre part la deuxième bride latérale 34 des secteurs angulaires 3 du deuxième groupe ;
- le premier joint 5 disposé dans la première gorge 36 formée dans la deuxième bride latérale 34 des secteurs angulaires 3 du premier groupe est comprimé entre d'une part la deuxième bride latérale 34 des secteurs angulaires 3 du premier groupe et d'autre part la première bride latérale 33 des secteurs angulaires 3 du deuxième groupe.

Selon une autre variante possible, la première gorge 36 peut être formée sur la première bride latérale 33 de chaque secteur angulaire 3, de sorte que le premier joint 5 est comprimé entre la première bride latérale 33 et la deuxième bride latérale 34, la deuxième bride latérale 34 étant quant à elle lisse. Il est à noter que d'une manière équivalente, la première gorge 36 peut être formée dans la deuxième bride latérale 34 de chaque secteur angulaire 3 tandis que la première bride latérale 33 est lisse. Par « lisse » on comprend également ici que la première bride latérale 33 ou la deuxième bride latérale 34 est dépourvue de la première gorge 36.

Afin d'assurer l'étanchéité entre le mandrin 2 et les secteurs angulaires 3, la bride amont 21 du mandrin 2 comprend une deuxième gorge 23 et la bride aval 22 du mandrin 2 comprend une troisième gorge 24.

La deuxième gorge 23 est une gorge annulaire qui court sur le contour de la bride amont 21, et plus précisément sur la surface plane de la bride amont 21 qui vient en contact avec la surface plane complémentaire de la bride avant 31 des secteurs angulaires 3.

La troisième gorge 24 est également une gorge annulaire qui court sur contour de la bride aval 22, et plus précisément sur la surface plane de la bride aval 22 qui vient en contact avec la surface plane complémentaire de la bride arrière 32 des secteurs angulaires 3.

Un deuxième joint 6 est disposé à l'intérieur de la deuxième gorge 23, et un troisième joint 7 est disposé à l'intérieur de la troisième gorge 24.

Le deuxième joint 6 est configuré pour être comprimé entre la bride amont 21 du mandrin 2 et la bride avant 31 des secteurs angulaires 3, permettant ainsi d'assurer l'étanchéité de la fixation entre la bride amont 21 du mandrin 2 et la bride avant 31 des secteurs angulaires 3.

Le troisième joint 7 est quant à lui configuré pour être comprimé entre la bride aval 22 du mandrin 2 et la bride arrière 32 des secteurs angulaires 3, permettant ainsi d'assurer l'étanchéité de la fixation entre la bride aval 22 du mandrin 2 et la bride arrière 32 des secteurs angulaires 3.

Le deuxième joint 6 et le troisième joint 7 peuvent être en élastomère, qui est un matériau adapté aux contraintes rencontrées par le deuxième joint 6 et le troisième joint 7. Le deuxième joint 6 et le troisième joint 7 peuvent être en élastomère vulcanisable à froid (ou RTV pour « Room-Temperature-Vulcanizing » selon la terminologie anglo-saxonne), et notamment en silicone vulcanisable à froid.

Comme cela est représenté en détail sur les figures 3a et 3b, lorsqu'un secteur angulaire 3 est fixé sur le mandrin 2, la première gorge 36 formée dans la première bride latérale 34 débouche d'une part dans la deuxième gorge 23 formée dans la bride amont 21, et d'autre part dans la troisième gorge 24 formée dans la bride aval 22.

Le fait que la première gorge 36 débouche dans la deuxième gorge 23 et la troisième gorge 24 permet d'assurer une continuité de l'étanchéité.

Par ailleurs, comme cela est illustré sur la figure 2, la première gorge 36 comprend une forme ondulée, permettant ainsi de limiter le risque du premier joint 5 de sortir de ladite première gorge 36.

La forme ondulée de la première gorge 36 est avantageusement une forme crénelée, ladite première gorge 36 comprenant des créneaux dirigés radialement vers l'intérieur, et des créneaux dirigés radialement vers l'extérieur. Une telle forme crénelée permet de limiter le risque que le premier joint 5 sorte de la première gorge 36.

Par créneau dirigé radialement vers l'intérieur on comprend ici une portion de la première gorge 36 sur laquelle la première gorge 36 se rapproche du mandrin 2, et par créneau dirigé radialement vers l'extérieur on comprend ici une portion de la première gorge 36 sur laquelle la première gorge 36 s'éloigne du mandrin 2.

Comme cela est illustré sur la figure 2, les créneaux dirigés radialement vers l'extérieur de la première gorge 36 peuvent être avantageusement situés entre deux perçages 35.

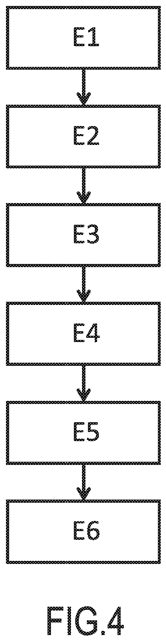

Le moule 1 peut être utilisé afin de mettre en œuvre le procédé de fabrication du carter de soufflante en matériau composite tel qu'illustré sur la figure 4, le procédé comprenant les étapes suivantes :
- E1 : enrouler la préforme fibreuse du carter de soufflante autour du mandrin 2 ;
- E2 : assembler la pluralité de secteur angulaires 3 de contre-moule sur le contour externe du mandrin 2 en fixant la première bride latérale 33 des secteurs angulaires 3 avec la deuxième bride latérale 34 d'un secteur angulaire 3 adjacent. Les secteurs angulaires 3 sont également fixés au mandrin 2 en fixant les brides avant 31 et arrière 32 des secteurs 3 aux brides amont 21 et aval 22 du mandrin 2 ;
- E3 : densifier la préforme fibreuse par injection d'un matériau précurseur d'une matrice du matériau composite dans le moule 1, le moule 1 comprenant des orifices d'injection pour l'injection dudit matériau précurseur ;
- E4 : polymériser le matériau précurseur pour obtenir la matrice du matériau composite ;
- E5 : retirer la pluralité de secteurs angulaires 3, cette étape étant réalisée en découplant les premières brides latérales 33 des deuxièmes brides latérales 34, les brides avant 31 de la bride amont 21, ainsi que les brides arrières 32 de la bride aval 32 ;
- E6 : démouler le carter de soufflante.

## Revendications

1. Moule (1) pour la fabrication d'un carter de soufflante de turbomachine en matériau composite comprenant :
- un mandrin (2) autour duquel une préforme fibreuse de carter de soufflante est destiné à être enroulée ;
- une pluralité de secteurs angulaires (3) de contre-moule assemblés sur le contour externe du mandrin (2) qui sont destinés à fermer le moule (1) et à compacter la préforme fibreuse enroulée sur le mandrin (2) ;
chaque secteur angulaire (3) comprenant d'une part une première bride latérale (33) qui est située à première extrémité des secteurs angulaires (3) et d'autre part une deuxième bride latérale (34) qui est située à une deuxième extrémité des secteurs angulaires (3) et qui est opposée à la première extrémité, la première bride latérale (33) et la deuxième bride latérale (34) étant configurée pour coopérer respectivement avec la deuxième bride latérale (34) et la première bride latérale (33) des secteurs angulaires (3) adjacents,
au moins un secteur angulaire (3) comprenant une première gorge (36) formée dans au moins une parmi la première bride latérale (33) et la deuxième bride latérale (34), un premier joint (5) étant disposé dans ladite première gorge (36), ledit premier joint (5) étant configuré pour être comprimé entre la première bride latérale (33) et la deuxième bride latérale (34) de deux secteurs angulaires (3) adjacents.

2. Moule (1) selon la revendication 1, dans lequel chaque secteur angulaire (3) comprend une bride avant (31) et une bride arrière (32) qui sont configurées pour coopérer respectivement avec une bride amont (21) et une bride aval (22) du mandrin (2), la bride amont (21) et la bride aval (22) comprenant respectivement une deuxième gorge (23) et une troisième gorge (24), un deuxième joint (6) et un troisième joint (7) étant respectivement disposé dans la deuxième gorge (23) et la troisième gorge (24), ledit deuxième joint (6) étant configuré pour être comprimé entre la bride amont (21) du mandrin (2) et la bride avant (31) des secteurs angulaires (3), ledit troisième joint (7) étant configuré pour être comprimé entre la bride aval (22) du mandrin (2) et la bride arrière (32) des secteurs angulaires (3), la première gorge (36) débouchant d'une part dans la deuxième gorge (23) et d'autre part dans la troisième gorge (24).

3. Moule (1) selon l'une quelconque des revendications 1 à 2, dans lequel le moule (1) comprend un premier groupe de secteurs angulaires (3) pour lesquels la première gorge (36) est formée sur la première bride latérale (33) et sur la deuxième bride latérale (34), et un deuxième groupe de secteurs angulaires (3) pour lesquels la première bride latérale (33) et la deuxième bride latérale (34) sont lisses, un secteur angulaire (3) du premier groupe étant disposé entre deux secteurs angulaires (3) du deuxième groupe.

4. Moule (1) selon l'une quelconque des revendications 1 à 2, dans lequel la première gorge (36) est formée sur la première bride latérale (33) de chaque secteur angulaire (3).

5. Moule (1) selon l'une quelconque des revendications 1 à 4, dans lequel la première gorge (36) comprend une forme ondulée.

6. Moule (1) selon la revendication 5, dans lequel la première gorge (36) est crénelée, la première gorge (36) comprenant d'une part une pluralité de créneaux dirigés radialement vers l'intérieur et d'autre part une pluralité de créneaux dirigés radialement vers l'extérieur.

7. Moule (1) selon l'une quelconque des revendications 1 à 6, dans lequel la première bride et la deuxième bride des secteurs angulaires (3) comprennent des perçages (35), chaque secteur angulaire (3) étant fixé à un secteur angulaire (3) adjacent par des boulonnages disposés d'une part dans les perçages (35) de la première bride latérale (33) du secteur angulaire (3) et d'autre part dans les perçages (35) de la deuxième bride latérale (34) du secteur angulaire (3) adjacent.

8. Moule (1) selon la revendication 7 prise en combinaison avec la revendication 6, dans lequel les créneaux dirigés radialement vers l'extérieur sont situés entre deux perçages (35).

9. Moule (1) selon l'une quelconque des revendications 1 à 8, dans lequel le premier joint (5) est en élastomère, par exemple un élastomère vulcanisable à froid.

10. Procédé de fabrication d'un carter de soufflante de turbomachine en matériau composite avec le moule (1) selon l'une quelconque des revendications 1 à 9, le procédé comprenant les étapes suivantes :
- (E1) : enrouler une préforme fibreuse du carter de soufflante autour du mandrin (2) ;
- (E2) : assembler la pluralité de secteurs angulaires (3) de contre-moule sur le contour externe du mandrin (2) en fixant la première bride latérale (33) des secteurs angulaires (3) avec la deuxième bride latérale (34) d'un secteur angulaire (3) adjacent ;
- (E3) : densifier la préforme fibreuse par injection d'un matériau précurseur d'une matrice du matériau composite dans le moule (1) ;
- (E4) : polymériser le matériau précurseur pour obtenir la matrice du matériau composite ;
- (E5) : retirer la pluralité de secteurs angulaires (3) ;
- (E6) : démouler le carter de soufflante.

## Patentansprüche

1. Form (1) für die Herstellung eines Gebläsegehäuses einer Turbomaschine aus Verbundmaterial, umfassend:
- eine Spindel (2), um welche eine Faservorform des Gebläsegehäuses herum gewickelt werden soll,
- mehrere Gegenform-Winkelsektoren (3), die auf der äußeren Kontur der Spindel (2) zusammengebaut und dazu bestimmt sind, die Form (1) zu schließen und die auf die Spindel (2) aufgewickelte Faservorform zu verdichten,
wobei jeder Winkelsektor (3) einerseits einen ersten seitlichen Flansch (33), der sich an einem ersten Ende der Winkelsektoren (3) befindet, und andererseits einen zweiten seitlichen Flansch (34) umfasst, der sich an einem zweiten Ende der Winkelsektoren (3) befindet und dem ersten Ende entgegengesetzt ist, wobei der erste seitliche Flansch (33) und der zweite seitliche Flansch (34) dazu ausgestaltet sind, jeweils mit dem zweiten seitlichen Flansch (34) bzw. dem ersten seitlichen Flansch (33) der benachbarten Winkelsektoren (3) zusammenzuwirken,
wobei zumindest ein Winkelsektor (3) eine erste Nut (36) umfasst, die in zumindest einem von dem ersten seitlichen Flansch (33) und dem zweiten seitlichen Flansch (34) ausgebildet ist, wobei eine erste Dichtung (5) in der ersten Nut (36) angeordnet ist, wobei die erste Dichtung (5) dazu ausgestaltet ist, zwischen dem ersten seitlichen Flansch (33) und dem zweiten seitlichen Flansch (34) von zwei benachbarten Winkelsektoren (3) komprimiert zu werden.

2. Form (1) nach Anspruch 1, wobei jeder Winkelsektor (3) einen vorderen Flansch (31) und einen hinteren Flansch (32) umfasst, die dazu ausgestaltet sind, jeweils mit einem stromaufwärtigen Flansch (21) und einem stromabwärtigen Flansch (22) der Spindel (2) zusammenzuwirken, wobei der stromaufwärtige Flansch (21) und der stromabwärtige Flansch (22) jeweils eine zweite Nut (23) und eine dritte Nut (24) umfassen, wobei eine zweite Dichtung (6) und eine dritte Dichtung (7) jeweils in der zweiten Nut (23) und der dritten Nut (24) angeordnet sind, wobei die zweite Dichtung (6) dazu ausgestaltet ist, zwischen dem stromaufwärtigen Flansch (21) der Spindel (2) und dem vorderen Flansch (31) der Winkelsektoren (3) komprimiert zu werden, und die dritte Dichtung (7) dazu ausgestaltet ist, zwischen dem stromabwärtigen Flansch (22) der Spindel (2) und dem hinteren Flansch (32) der Winkelsektoren (3) komprimiert zu werden, wobei die erste Nut (36) einerseits in die zweite Nut (23) und andererseits in die dritte Nut (24) mündet.

3. Form (1) nach einem der Ansprüche 1 bis 2, wobei die Form (1) eine erste Gruppe von Winkelsektoren (3), für welche auf dem ersten seitlichen Flansch (33) und auf dem zweiten seitlichen Flansch (34) die erste Nut (36) ausgebildet ist, und eine zweite Gruppe von Winkelsektoren (3) umfasst, für welche der erste seitliche Flansch (33) und der zweite seitliche Flansch (34) glatt sind, wobei ein Winkelsektor (3) der ersten Gruppe zwischen zwei Winkelsektoren (3) der zweiten Gruppe angeordnet ist.

4. Form (1) nach einem der Ansprüche 1 bis 2, wobei die erste Nut (36) auf dem ersten seitlichen Flansch (33) eines jeden Winkelsektors (3) ausgebildet ist.

5. Form (1) nach einem der Ansprüche 1 bis 4, wobei die erste Nut (36) eine gewellte Gestalt umfasst.

6. Form (1) nach Anspruch 5, wobei die erste Nut (36) gezahnt ist, wobei die erste Nut (36) einerseits mehrere Zähne, die radial nach innen gerichtet sind, und andererseits mehrere Zähne umfasst, die radial nach außen gerichtet sind.

7. Form (1) nach einem der Ansprüche 1 bis 6, wobei der erste Flansch und der zweite Flansch der Winkelsektoren (3) Löcher (35) umfassen, wobei jeder Winkelsektor (3) an einem benachbarten Winkelsektor (3) durch Verschraubungen befestigt ist, die einerseits in den Löchern (35) des ersten seitlichen Flansches (33) des Winkelsektors (3) und andererseits in den Löchern (35) des zweiten seitlichen Flansches (34) des benachbarten Winkelsektors (3) angeordnet sind.

8. Form (1) nach Anspruch 7 in Kombination mit Anspruch 6, wobei die radial nach außen gerichteten Zähne sich zwischen zwei Löchern (35) befinden.

9. Form (1) nach einem der Ansprüche 1 bis 8, wobei die erste Dichtung (5) aus Elastomer besteht, zum Beispiel einem kalt vulkanisierten Elastomer.

10. Verfahren zur Herstellung eines Gebläsegehäuses einer Turbomaschine aus Verbundmaterial mit der Form (1) nach einem der Ansprüche 1 bis 9, wobei das Verfahren die folgenden Schritte umfasst:
- (E1): Aufwickeln einer Faservorform des Gebläsegehäuses um die Spindel (2) herum,
- (E2): Zusammenbauen der mehreren Gegenform-Winkelsektoren (3) auf der äußeren Kontur der Spindel (2) durch Befestigen des ersten seitlichen Flansches (33) der Winkelsektoren (3) an dem zweiten seitlichen Flansch (34) eines benachbarten Winkelsektors (3),
- (E3): Verdichten der Faservorform durch Einspritzen eines Vorläufermaterials einer Matrix des Verbundmaterials in die Form (1),
- (E4): Polymerisieren des Vorläufermaterials, um die Matrix des Verbundmaterials zu erhalten,
- (E5): Abnehmen der mehreren Winkelsektoren (3),
- (E6): Entformen des Gebläsegehäuses.

## Claims

1. A mold (1) for the manufacture of a turbomachine fan casing of composite material comprising:
- a mandrel (2) around which a fibrous preform of the fan casing is intended to be wound;
- a plurality of counter-mold angular sectors (3) assembled on the external contour of the mandrel (2), which are intended to close the mold (1) and to compact the fibrous preform wound on the mandrel (2);
each angular sector (3) comprising, on the one hand, a first lateral flange (33) which is positioned at the first end of the angular sectors (3), and on the other hand, a second lateral flange (34) which is positioned at a second end of the angular sectors (3) and which is opposite to the first end, the first lateral flange (33) and the second lateral flange (34) being configured to cooperate respectively with the second lateral flange (34) and the first lateral flange (33) of the adjacent angular sectors,
at least one angular sector (3) comprising a first groove (36) formed in at least one of the first lateral flange (33) and the second lateral flange (34), a first seal (5) being positioned in said first groove (36), said first seal (5) being configured to be compressed between the first lateral flange (33) and the second lateral flange (34) of two adjacent angular sectors (3).

2. The mold (1) according to claim 1, wherein each angular sector (3) comprises a front flange (31) and a rear flange (32) which are configured to cooperate respectively with an upstream flange (21) and a downstream flange (22) of the mandrel (2), the upstream flange (21) and the downstream flange (22) comprising respectively a second groove (23) and a third groove (24), a second seal (6) and a third seal (7) being respectively positioned in the second groove (23) and the third groove (24), said second seal (6) being configured to be compressed between the upstream flange (21) of the mandrel (2) and the front flange (31) of the angular sectors (3), said third seal (7) being configured to be compressed between the downstream flange (22) of the mandrel (2) and the rear flange (32) of the angular sectors (3), the first groove (36) leading, on the one hand, into the second groove (23) and, on the other hand, into the third groove (24).

3. The mold (1) according to any one of claims 1 to 2, wherein the mold (1) comprises a first group of angular sectors (3) for which the first groove (36) is formed on the first lateral flange (33) and on the second lateral flange (34), and a second group of angular sectors (3) for which the first lateral flange (33) and the second lateral flange (34) are smooth, one angular sector (3) of the first group being positioned between two angular sectors (3) of the second group.

4. The mold (1) according to any one of claims 1 to 2, wherein the first groove (36) is formed on the first lateral flange (33) of each angular sector (3).

5. The mold (1) according to any one of claims 1 to 4, wherein the first groove (36) comprises an undulated shape.

6. The mold (1) according to claim 5, wherein the first groove (36) is crenelated, the first groove (36) comprising, on the one hand, a plurality of slots directed radially inward and, on the other hand, a plurality of slots directed radially outward.

7. The mold (1) according to any one of claims 1 to 6, wherein the first flange and the second flange of the angular sectors (3) comprise bores (35), each angular sector (3) being attached to an adjacent angular sector (3) by boltwork positioned, on the one hand, in the bores of the first lateral flange (33) of the angular sector (3) and, on the other hand, in the bores (35) of the second lateral flange (34) of the adjacent angular sector (3).

8. The mold (1) according to claim 7, taken in combination with claim 6, wherein the slots directed radially outward are positioned between two bores (35).

9. The mold (1) according to any one of claims 1 to 8, wherein the first seal (5) is made of elastomer, for example a cold-vulcanizing elastomer.

10. A manufacturing method of a turbomachine fan casing of composite material with the mold (1), according to any one of claims 1 to 9, the method comprising the following steps:
- (E1): winding a fibrous preform of the fan casing around the mandrel (2);
- (E2): assembling the plurality of counter-mold angular sectors (3) on the external contour of the mandrel (2) by attaching the first lateral flange (33) of the angular sectors (3) to the second lateral flange (34) of an adjacent angular sector (3);
- (E3): densifying the fibrous preform by injection of a precursor material of a matrix of the composite material into the mold (1);
- (E4): polymerizing the precursor material to obtain the matrix of the composite material;
- (E5): withdrawing the plurality of angular sectors (3);
- (E6): de-molding the fan casing.
